(19) Europäisches Patentamt
European Patent Office
Office européen des brevets

(11) **EP 3 258 222 A1**

(12) **EUROPEAN PATENT APPLICATION**

(43) Date of publication:
**20.12.2017 Bulletin 2017/51**

(51) Int Cl.:
*G01D 11/30* (2006.01)          *B60R 11/00* (2006.01)
*F16B 1/00* (2006.01)

(21) Application number: **16305732.6**

(22) Date of filing: **16.06.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Fly By Wire Systems France
26240 Saint-Vallier, (FR)**

(72) Inventors:
• **BETTINI, Pierre
07130 SAINT-PERAY (FR)**
• **PONSONNET, Rémi
26240 BEAUSEMBLANT (FR)**

(74) Representative: **Lavoix
62, rue de Bonnel
69448 Lyon Cedex 03 (FR)**

(54) **A CONNECTOR ARRANGEMENT FOR CONNECTING A SENSOR MODULE TO A VEHICLE AND A METHOD FOR CONNECTING THE SENSOR MODULE TO THE VEHICLE**

(57)    The present invention and the embodiments thereof relate to a connector arrangement (10) for connecting a sensor module (15) to a vehicle and a method (500) for connecting the sensor module (15) to the vehicle. The arrangement (10) includes an interface assembly (25) having a first connector unit (30) and a second connector unit (35). The first connector unit (30) is connected to the sensor module (15), and the second connector unit (35) is connected to the predefined region (20). It is proposed that at least one of the first connector unit (30) and the second connector unit (35) is adjustable for changing connecting configurations between the sensor module (15) and the predefined region (20), such that in each of the connecting configurations, the sensor module (15) is connected to a different location of the predefined region (20).

FIG 1

**Description**

The present invention generally relates to connecting a sensor module to a vehicular region. In particular, the present invention relates to an arrangement comprising an interface assembly and related connector units for connecting a sensor module to a predefined region of a vehicle, for example, connecting a sensor module to an engine bay of an automobile, connecting a sensor module to cockpit region an aeroplane, et cetera.

The present invention also relates to a fly-by-wire sensor module for controlling an aeroplane, wherein the fly-by-wire sensor module is arranged in a recess of the aeroplane

Furthermore, the present invention also relates to a method for connecting the sensor module to the vehicular region using the arrangement.

The present day vehicles include a variety of loaded hardware modules such as communication systems, entertainment systems, security systems, et cetera, for realizing certain evolving requirements. In spite of the loaded hardware modules in the vehicle, end users wish to have additional comfort and convenience features which evolve over time, for which additional hardware modules are required to be fitted into the vehicles. Therefore, it becomes more challenging and constraining for both the vehicle manufacturers and hardware module manufacturers for providing more vehicular space or for providing more optimal design of hardware modules respectively, whereby ingenious utilization of available space for the purpose of installing additional hardware modules is achieved. However, the vehicle manufacturers and hardware module manufacturers need not be the same always. As a result, the vehicle manufacturer cannot provide an assigned vehicular space/recess for accommodating a particular type of future hardware module, and on the other hand, hardware module manufacturer cannot always manufacture a hardware module to suit the available space requirement for installing a hardware module in a particular type of vehicle. Thus, this disconnect between the different vehicle manufacturers and numerous hardware module manufacturers leads to a challenging situation for the end user thereby restraining the end user from installing a desired hardware module easily into an already existing vehicle.

For example, in an automobile such as a passenger car, a truck or an off-road vehicle, many hardware modules are preinstalled in an engine bay of the automobile at the time of manufacture. However, if a user desires to install a new commercially-off-the-shelf available hardware module, such as an advanced GPS based fuel management and a monitoring system, into an existing space/recess in an engine bay of the automobile, then the installation of the hardware module within the existing space can be a major constraint, because the shape, size, and connecting arrangements of the hardware modules may not conform to the existing space. Further, even if the hardware module is somehow arranged into the existing space, it should neither interfere with other hardware modules in its vicinity, nor with operator movements of that vehicle.

As a further example, in an aeroplane, various hardware modules are to be installed during the operational lifespan of the aeroplane based on the evolving requirements. For example, communication modules and sensor modules in a cockpit are required to be replaced or upgraded on a timely basis, and shapes of the hardware modules also change depending on the upgrade features, capabilities, manufacturers, et cetera. Also, these hardware modules occupy a significant amount of available space in the cockpit. Also, the arrangements of sensor modules differ from one aeroplane cockpit type to another, because of different cockpit configurations, cockpit spaces/recesses, cockpit designs and cockpit dimensions. Therefore, it may be noted that the space available within the cockpit is limited and is a constraining factor during the installation and upgradation of new hardware modules. Also, the chances of increasing available space or modifying the cockpit to accommodate various devices are extremely limited, the chances of modifying the dimensions of the devices to be installed in the available space of the cockpit region of an aeroplane are also extremely limited, firstly, because the hardware module manufacturers and the aeroplane manufacturers are not the same always, and secondly, due to the stringent regulations prevailing in the aerospace industry.

Consequently, the manufacturers of the sensor modules for an aeroplane have to design each sensor module for a certain type of aeroplane separately to suit the space requirements of the cockpit of that aeroplane, whereby leading to additional manufacturing cost and increased lead times for manufacturing various sensor modules.

There is a long felt need to solve the problem of customized arrangement of hardware modules into already available and stringent spaces of a vehicle, especially during the operational lifespan of the vehicle.

The techniques known till date do not provide effective and efficient solutions, because it mandates either intensive design modifications to the vehicle and/or to the hardware module, which are mostly impractical and uneconomical practices.

The objective of the invention is to propose an ingenious and an economical design of an arrangement for connecting a sensor module to various surfaces of predefined regions of a vehicle, which is based on an already designed and manufactured vehicle, without imposing major design modifications to the sensor module and/or the vehicle. It is also an objective to provide a method for connecting the sensor module to the predefined region of the vehicle using the arrangement.

The aforementioned objective is achieved by an arrangement for connecting a sensor module to a predefined region of a vehicle in accordance with claim 1, and a method for connecting the sensor module to the predefined region of the vehicle in accordance with claim 15.

The underlying objective of the present invention is to provide an arrangement for connecting a sensor module to various surfaces of predefined regions of a vehicle without imposing major design modifications to the sensor module and/or the vehicle. Additionally, a final orientation of the sensor module with respect to the predefined region remains the same irrespective of a final connection that is established between the sensor module and the predefined region. The mechanical design characteristics and dynamics of arrangement for connecting the sensor module to the predefined region enable the achievement of the objective.

The arrangement according to the present invention includes an interface assembly having a first connector unit and a second connector unit. The first connector unit is connected to a portion of the sensor module, and the second connector unit is connected to the predefined region of the vehicle. The first and second connector units are therein mechanically connected. Herein, the connection between the sensor module and the first connector unit, and the connection between the second connector unit and the predefined regions are such that during the operation of the vehicle, the sensor module is held tightly to the predefined region and the sensor module is not dislodged and/or misaligned therefrom.

It may be construed herein that no major mechanical modifications are required to be performed on the sensor module and/or the predefined region.

The manner in which the sensor module is connected to the predefined region is termed as a 'connecting configuration'. For example, in one vehicle, if the predefined region has two surfaces, viz., a first surface and a second surface, it may be construed that the connection of the sensor module to only the first surface using the interface assembly results in a first connecting configuration, the connection of the sensor module to only the second surface using the interface assembly results in a second connecting configuration, and the connection of the sensor module to both the first surface and the second surface using the interface assembly results in a third connecting configuration, and so forth.

Similarly, in a first vehicle, if a first predefined region of the first vehicle has a first connecting surface, and in a second vehicle, a corresponding second predefined region of the second vehicle has a second connecting surface, then a first connecting configuration can be construed as the sensor module connected to the first connecting surface of the first vehicle, and a second connecting configuration can be construed as the sensor module connected to the second connecting surface of the second vehicle.

Furthermore, in the present invention, the first connector unit and/or the second connector unit is mechanically adjustable such that the connecting configuration is changeable depending on a spatial geometry of the predefined region, such that the orientation of the sensor module with respect to the predefined region is not changed during the adjustment of the first connector unit and/or the second connector unit. For example, if the connection between the sensor module and the predefined region is capable of being established only at a certain surface of the predefined region, and if the sensor module is not directly attachable to the surface, then the first connector unit and/or second connector unit is capable of being oriented or turned or twisted such that a tight connection between the sensor module and the predefined region is realizable at the surface of the predefined region for tightly affixing the sensor module to the predefined region. It is to be construed that the orientation of sensor module with respect to the predefined region is not changed herein even if the connecting configuration is changed from the first connecting configuration to the second connecting configuration, from the second connecting configuration to the third connecting configuration, and the like. Nevertheless, the sensor module is advantageously connected to the predefined region in a configuration such that the sensor module is arranged into the predefined region in the most optimal manner, thereby leading to the best use of available space as defined by the predefined region.

Herein, mechanically adjustable characteristic of the first connector unit and/or second connector unit gives the freedom of arranging the sensor module according to the spatial geometry of the predefined region of the vehicle and better utilization of the space available in the predefined region of the vehicle. Mechanically adjustable nature of the first connector unit and/or second connector unit avoids the need for major design modifications to the sensor module and/or the vehicle, thereby resulting in economic benefits for vehicle manufacturers and/or sensor module manufacturers. Further, mechanically adjustable nature of the first connector unit and/or second connector unit increases the possibility of arranging additional sensor modules, for example accommodating a communication system, within the available space in the predefined region of the vehicle, thereby making the vehicle safer, more secure and more user-friendly.

According to an embodiment of the present invention, the first connector unit includes a sensor module frame, interface assembly frame, and a frame connecting means. The sensor module frame is located in the aforementioned portion of the sensor module where the connection with the interface assembly frame is established. The sensor module frame and the interface assembly frame are connected by means of the frame connecting means. The sensor module frame and interface assembly frame are discrete and independent components, whereby simply by twisting or turning or changing an orientation of the interface assembly frame with respect to the sensor module frame, the orientation of the second connector unit with respect to the predefined region is consequently changed with minimal effort, thereby enabling effective changes to locations on the predefined region of the vehicle whereto the sensor module is finally connected.

According to another embodiment of the present invention, the sensor module frame includes a first plurality of holes. The interface assembly frame includes a second plurality of holes. Herein, in a first connecting configuration, a first pair set of holes ($PS_1$) of the first plurality of holes is connected to the second plurality of holes. To obtain a second connecting configuration, a second pair set of holes ($PS_2$) of the first plurality of holes and the second plurality of holes is connected. It is to be noted that the first pair set of holes is different from the second pair set of holes. Different connecting configurations are easily realizable by changing the pairs of holes that enable connections between the sensor module frame and the interface assembly frame, whereby it becomes easier to change an orientation of the second connector unit to adapt to a geometric profile of the predefined region for enabling the connection between the sensor module and the predefined region, without changing an orientation of the sensor module frame with respect to the predefined region, and also by making minimal modifications to the interface assembly. Furthermore, providing holes in the sensor module frame and interface module frame and further providing flexibility to change connections between hole-pairs to enable different connecting configurations of the sensor module with respect to the predefined region, involve lesser mechanical effort, lesser design modification, and lesser costs, and the design is easily realizable.

According to yet another embodiment of the present invention, the frame connecting means for connecting the sensor module frame and interface assembly frame is selected from a group of fasteners including nuts and bolts, screws, rivets, and tie bolts. Nuts and bolts, screws, rivets and tie bolts are simplest mechanical fastener elements usable to make a firm mechanical connection between sensor module frame and interface assembly frame. By using nuts and bolts, screws, rivets and tie bolts, it is easy to attach and detach sensor module frame and interface assembly frame. Nuts and bolts, screws, rivets and tie bolts of various sizes are easily and readily available in the market. The first and second pluralities of holes can be provided with threads, if bolts and screws are used as the fasteners for connecting the sensor module frame and interface assembly frame.

According to yet another embodiment of the present invention, a geometric profile of the sensor module frame profile conforms to an external geometric profile of the sensor module, wherewith an attachment of the sensor module frame to the sensor module is easily accomplished. Herein, similar geometries of the sensor module frame and sensor module, sensor module frame, a firmer mechanical connection can be established between the sensor module and the sensor module frame.

According to yet another embodiment of the present invention, the geometric profile of the sensor module frame is annular. Annular shapes are easily manufacturable by well-known mechanical manufacturing processes, such as casting, forging, et cetera. Furthermore, annular profiles of the sensor module frame occupies lesser circumferential area thereby making the sensor module frame more compact and easier to handle as compared to other geometric profiles. Additionally, annular profiles are beneficial for providing the first and second pluralities of holes in the sensor module frame and the interface assembly frame for changing an orientation of the second connector unit in accordance with the location whereto the sensor module is desirably connected.

According to yet another embodiment of the present invention, the sensor module frame is integral to the sensor module, whereby the mechanical coupling between the sensor module frame and sensor module is capable of being made stronger. Consequently, stronger mechanical coupling reduces chances of dislodgement during an operation of the vehicle.

According to yet another embodiment of the present invention, the second connector unit includes a region conforming end, and an end connecting means for connecting the region conforming end to the predefined region. The mechanical connection between sensor module and the predefined region is established by the region conforming end and the end connecting means. The region conforming end is in physical contact with the predefined region and the end connecting means helps in providing firmer mechanical connection between region connecting means and the predefined region of the vehicle.

According to yet another embodiment of the present invention, the region conforming end includes a plurality of connecting legs, wherewith it is possible to connect the sensor module predefined region at more than one place on the surface of the predefined region, thereby making the mechanical connections between the sensor module and the vehicle stronger and more reliable.

According to yet another embodiment of the present invention, lengths of different connecting legs of the plurality of connecting legs are different. Thus, the sensor module can be advantageously connected to the predefined region, even if surface characteristics of a location of predefined region, where the connection between the sensor module and the predefined region is established, is not uniform. The lengths of different connecting legs can be geometrically profiled in accordance with the surface characteristics of a location, thereby facilitating stronger mechanical connections of the sensor module and the vehicle.

According to yet another embodiment of the present invention, the plurality of connecting legs includes one or more plurality of holes. According to yet another embodiment of the present invention, the end connecting means is selected from a group of fasteners including nuts and bolts, screws, rivets, and tie bolts.

Holes present in the connecting legs, and the end connecting means, together help in establishing a mechanical connection between the sensor module and predefined region of the vehicle. By having holes, it is possible to detach the sensor module from the predefined region of the vehicle, for example during maintenance of the sensor module. Additionally, the purpose of using end connecting means is to make the attachment between the region connecting end and predefined region stronger. By using nuts and bolts, screws, rivets and tie bolts, it is easier to attach and detach sensor module frame from the predefined region. Nuts and bolts, screws, rivets and tie bolts of various sizes are easily and readily available as commercially off-the-shelf components.

According to yet another embodiment of the present invention, the second connector unit is detachably attachable to the sensor module. Therefore, it is possible to detach the interface assembly from the sensor module, change the orientation of second connector unit with respect to the predefined region, and attach the interface assembly to a different location of predefined region without changing a desired orientation of the sensor module with respect to the predefined region. Furthermore, the detachably attachable characteristic of the second connector unit is beneficial and increases flexibility of detachment during service related maintenance operations of the arrangement used for connecting the sensor module to predefined region.

A fly-by-wire sensor module for controlling an aeroplane is disclosed herein. The fly-by-wire sensor module is arranged in a recess of the aeroplane, and the recess is defined by at least one or more surfaces of the aeroplane. The fly-by-wire sensor module includes an interface assembly having a first connector unit and a second connector unit. The first connector unit is connected to a portion of the fly-by-wire sensor module, and the second connector unit is connected to a surface of the one or more surfaces. At least one of the first connector unit and the second connector unit is adjustable for changing connecting configurations between the fly-by-wire sensor module and the surface, and in each of the connecting configurations the fly-by-wire sensor module is connected to different locations of the one or more surfaces without altering an orientation of the fly-by-wire sensor module. Thus, the mechanically adjustable characteristic of the first connector unit and/or second connector unit gives the freedom of arranging the fly-by-wire sensor module according to the spatial geometry of the recess of the aeroplane and better utilization of the space available in the recess of the aeroplane.

A method for connecting the sensor module to the predefined region of the vehicle using the arrangement is disclosed herein. Firstly, the interface assembly having the first connector unit and the second connector unit is constructed. Secondly, the first connector unit is connected to the portion of the sensor module. Thirdly, the second connector unit is connected to the predefined region. The interface assembly is constructed such that in each of the connecting configurations the sensor module is connected to different locations of the one or more surfaces. The aforementioned advantages related to the arrangements and various embodiments thereof are also applicable to the method for connecting the sensor module to the predefined region of the vehicle using the arrangement.

The aforementioned and other embodiments of the invention related to a connector arrangement for connecting a sensor module to a vehicle and a method for connecting the sensor module to the vehicle using the connector arrangement will now be addressed with reference to the accompanying drawings of the present invention. The illustrated embodiments are intended to illustrate, but not to limit the invention. The accompanying drawings contain the following figures, in which like numbers refer to like parts, throughout the description and drawings.

The figures illustrate in a schematic manner further examples of the embodiments of the invention, in which:

FIG 1 depicts an arrangement for connecting a sensor module to a predefined region of a vehicle by means of an exemplary connecting configuration according to an embodiment of the invention,
FIG 2 depicts an exploded view of the arrangement referred to in FIG 1,
FIG 3-4 depicts other exemplary connecting configurations of the arrangement for connecting the sensor module to the predefined region of the vehicle referred to in FIG 1, and
FIG 5 depicts another embodiment of the arrangement for connecting the sensor module to the predefined region of the vehicle referred to in FIG 1, and
FIG 6 depicts a flowchart of a method for connecting the sensor module to the predefined region of the vehicle by means of the arrangement referred to in FIG 1.

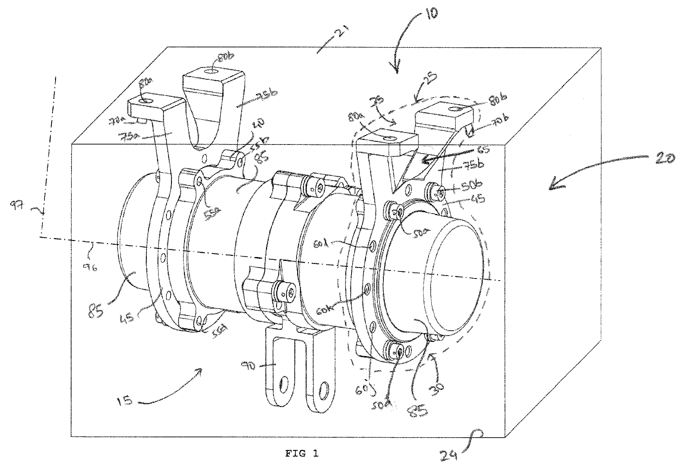

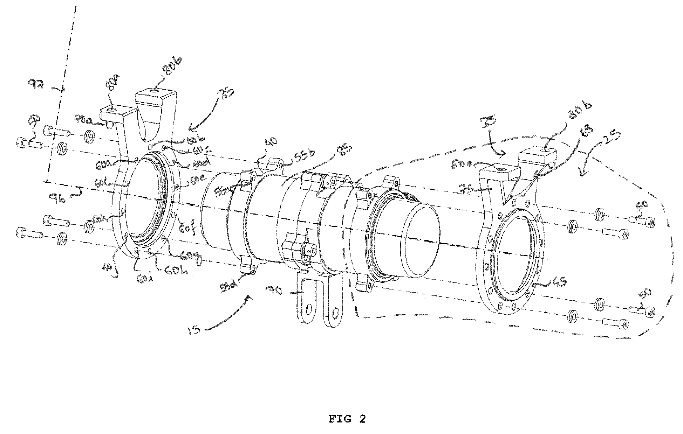

A schematic view of an arrangement 10 for connecting a sensor module 15 to a predefined region 20 of a vehicle (no depicted) according to an exemplary embodiment of the present invention is depicted in FIG 1. An exploded view of the aforementioned arrangement 10 and components thereof is depicted in FIG 2. FIG 1 and FIG 2 are jointly elucidated herein, and cross-references are made therebetween.

Herein, the vehicle can be construed to be an automobile, an aeroplane, a helicopter, a launch vehicle, et cetera, used for transportation. Furthermore, the predefined region 20 is to be construed as any specific open/closed three-dimensional space in the vehicle, such as a recess in the vehicle, used for the purpose of arranging the sensor module 15 thereinto, and the predefined region 20, can be but not limited to, a recess in a cockpit region comprising fly-by-wire hardware systems of an aeroplane or a helicopter, a recess in an engine bay of an automobile, a recess in a flight hardware compartment of a launch vehicle, et cetera. However, for the purpose of elucidation of the various embodiments of the present invention, an aeroplane is considered to be the exemplary vehicle, and the predefined region 20 is a recess in a cockpit region comprising fly-by-wire hardware systems for the aeroplane.

The recess 20 can be defined using one or more surfaces that enclose the sensor module 15 in the recess 20, and the surfaces are normally, a ceiling 21, one or more sidewalls 22, and a floor 24 of the recess 20 in the cockpit region. The surfaces 21, 22, 24 can be construed to be either even or uneven based on contours of the surfaces (the ceiling 21, the sidewall 22, and the floor 24). The sensor module 15 is connected to one or more of the aforementioned surfaces enclosing the recess 20 by means of the arrangement 10 and various embodiments thereof as disclosed in the succeeding paragraphs of the present disclosure.

Herein, 'connecting the sensor module 15 to the recess 20' is to be construed as 'connecting the sensor module 15 to the one or more surfaces 21, 22, 24 that define the recess 20'.

Furthermore, the sensor module 15 present in the recess 20 can be considered to be an exemplary fly-by-wire hardware module that replaces conventional manual flight controls of an aircraft with one or more electronic interfaces. The sensor module 15 preferably includes an array of sensors (not depicted) and related electronic circuits (not depicted). The sensor module 15 can be of any geometrical shape depending on an application of the sensor module 15. For simplicity, the sensor module 15 depicted therein has a cylindrical profile. The sensor module 15 extends along a longitudinal axis 96 (i.e. in a direction along the height of the cylindrical sensor module 15), and the sensor module 15 is connected to a lever 90. The lever 90 is always desired to be aligned in a certain orientation with respect to the longitudinal axis 96. The lever 90 extends radially outwards, i.e. in any of the perpendicular directions with respect to the longitudinal axis 96, and an exemplary radial extension is indicated as a radial axis 97.

The exemplary arrangement for connecting the sensor module 15 to one or more surfaces 21, 22, 24 of the recess 20 includes an interface assembly 25. The interface assembly 25 is a mechanical element, which in turn includes various connected mechanical components, such as a first connector unit 30, and a second connector unit 35. Various components of the interface assembly can be manufactured out of, but not limited to, metals, alloys, plastics, polymers, or a combination thereof. The sensor module 15 is connected to the interface assembly 25 by means of the first connector unit 30, and the interface assembly 25 is in itself connected to one of the surfaces 21, 22, 24 of the recess 20 by means of the second connector unit 35. Therewith, the sensor module 15 is connected to the recess 20 in the cockpit region of the aeroplane.

Also, either the first connector unit 30 or the second connector unit 35 have means for adjusting an orientation therebetween for enabling a suitable connection between the sensor module 15 and the recess 20. In the present invention, the arrangement 10 refers to the interface assembly 25 along with the means provided for adjusting the orientation between the first connector unit 30 and the second connector unit 35.

Herein, the first connector unit 30 includes two entities, viz., a sensor module frame 40 and an interface assembly frame 45. The sensor module frame 40 is depicted as an integral part of the sensor module 15, i.e. the sensor module frame 40 is manufactured along with the sensor module 15 as a single monolithic unit. The sensor module frame 40 conforms to an external geometry of the sensor module 15. The sensor module frame 40 is mechanically profiled as a circular structure, i.e. similar to a circular flange, which is in accordance with the cylindrical profile of the sensor module 15. The sensor module frame 40 is disposed circumferentially on the sensor module 15.

The sensor module frame 40 extends radially outwards from an external curved surface 85 of the sensor module 15, and the sensor module frame 40 is provided with a first plurality of holes 55a-55d. The first plurality of holes 55a-55d is disposed in a circumferential manner on the radially and outwardly extending portion 95 of the sensor module frame 40. Each of the first plurality of holes 55a-55d extends in a direction along the longitudinal axis 96, and is provided with a thread. In the present embodiment, the exemplary sensor module frame 40 comprises four exemplary contiguous holes 55a-55d (the first plurality of holes 55a-55d), wherein arc lengths between contiguous holes 55a-55d of the sensor module frame 40 are the same.

The interface assembly frame 45 is connected to the second connector unit 35, and the interface assembly frame 45 is also mechanically profiled as a circular flange radially extending outwards when viewed with respect to the sensor module 15. The interface assembly frame includes a second plurality of holes 60a-60f, and each of the second plurality of holes 60a-60e also extends in a direction along the longitudinal axis 96. In the present embodiment, the interface assembly frame 45 is provided with twelve exemplary contiguous holes 60a-60e (the second plurality of holes 60a-60f), wherein arc lengths between contiguous holes 60a-60e of interface assembly frame 45 are the same.

It may be noted herein that radii of each hole of the first plurality of holes 55a-55d and each hole of the second plurality of holes 60a-60e are preferably equal.

A frame connecting means 50a-50d is provided for mechanically connecting the interface assembly frame 45 and the sensor module frame 40, and the frame connecting means 50 can include mechanical fasteners, such as nuts and bolts, screws, tie bolts, rivets, et cetera. In the depicted embodiment, the frame connecting means 50a-50d comprises four tie bolts, wherein each tie bolt 50a-50d is inserted through a corresponding hole 55a-55d of the sensor module frame 40 and a corresponding hole 60a-60f of the interface assembly frame 45, and the tie bolt 50a-50d is subsequently fastened for obtaining a tight fit between the sensor module frame 40 and the interface assembly frame 45, thereby firmly connecting the sensor module 15 to the interface assembly 25.

Herein, 'a pair set of holes (PS)' is to be construed as a set of pair of holes of the sensor module frame 40 and the interface assembly frame 45 that are connected for obtaining the connecting configuration. In FIG 1, the four holes 55a-55d of the sensor module frame 40 are connected to the four corresponding holes 60a, 60C, 60g, 60i of the interface assembly frame 45, thereby resulting in a first pair set of holes (PS$_1$) indicated below, thereby establishing the first connecting configuration.

$$PS_1 = \{(55a, 60a), (55b, 60C), (55c, 60g), (55d, 60i)\}$$

It may be noted herein that the first connecting configuration orients the interface assembly 25 such that the sensor module 15 is attachable to the ceiling 21 of the cockpit region as depicted in FIG 1. More particularly, the second connector unit 35 of the interface assembly 25 is oriented towards the ceiling 21 of the cockpit region, i.e. a location whereto the sensor module 15 is desired to be attached.

The second connector unit 35 depicted therein includes a region conforming end 65 and an end connecting means 70. The end connecting means 70 connects the region conforming end 65 to one or more surfaces of the cockpit region 20. In the present embodiment, the region conforming end 65 includes two connecting legs 75a and 75b of equal lengths. Nevertheless, the lengths of the connecting lengths 75 can be different depending on a surface profile of the surface of the cockpit region whereto the sensor module 15 is attached. The connecting legs 75a and 75b have respective holes 80a, 80b and the holes 80a, 80b extend radially (i.e. along the radial axis 97).

The end connecting means 70 can include fasteners, such as, nuts and bolts, screws, tie bolts, rivets, et cetera, which are inserted through the holes 80a, 80b of the connecting legs 75a, 75b, and through holes (not depicted in FIG 1) provided in the ceiling 21 of the recess, i.e. the location whereto the sensor module 15 is connected. The end connecting means 70a, 70b can thereafter be tightened to connect the sensor module 15 firmly to the desired location in the recess.

Herein, the second connector unit 35, specifically the region conforming end 65 is attached to the interface assembly frame 45. In the present embodiment, the second connector unit 35 is integral to the interface assembly frame 45, i.e. the interface assembly frame 45 and the region conforming end 65 form one monolithic unit, whereby it is possible to orient the region conforming end 65 towards different locations of the recess 20 by rotating the interface assembly frame 45 accordingly.

In any specific connecting configuration, the region conforming end 65 is oriented towards the desired location of the recess, which is achieved by orienting the connecting legs 75 of the region conforming end 65 to a different desired location of the recess (i.e. to a different sidewall or to the floor of the cockpit region) by changing a combination of pair set of holes (PS) of the sensor module frame 40 and the interface assembly frame 45.

For example, from the first connecting configuration as defined by the first pair set of holes PS$_1$, the connecting configuration can be changed by choosing a second pair set of holes PS$_2$ for orienting the region conforming end 65 of the second connector unit 35 to a sidewall 22 of a cockpit region. The holes 55a-55d of the sensor module frame 40 and holes 60K, 60D, 60F, 60a of the interface assembly frame 45 that are required to be connected for realizing the second pair set of holes PS$_2$ are indicated below for establishing the second connecting configuration, wherewith the sensor module 15 is connectable to the sidewall 22 of the cockpit region.

$$PS_2 = \{(55a, 60K), (55b, 60D), (55c, 60F), (55d, 60a)\}$$

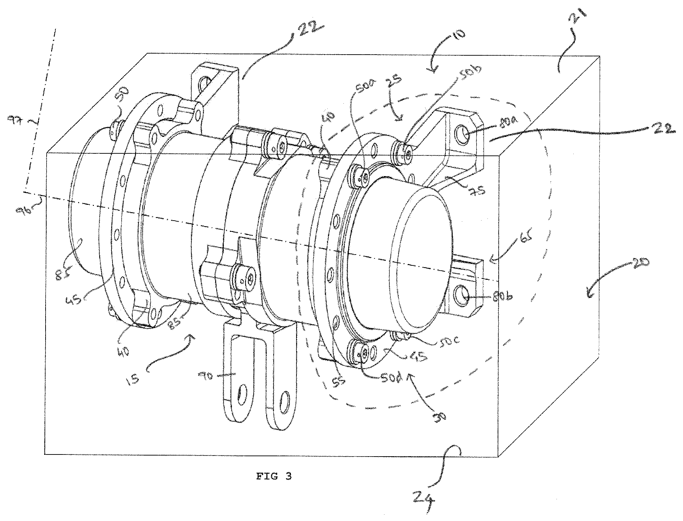

This results in the second connecting configuration for connecting the sensor module 15 to a sidewall 22 of the recess 20, and the second connecting configuration is depicted in FIG 3.

In short, from the first connecting configuration as defined by the first pair set of holes PS$_1$, firstly the fasteners 70a, 70b are detached by unthreading from the connecting legs 75a, 75b, and the fasteners 50-50d are detached by unthreading from the first plurality of holes 55a-55d and the second plurality of holes 60a, 60C, 60g, 60i. Thereafter, the interface assembly frame 45 is rotated clockwise by 90º, and the fasteners 50a-50d are attached by threading into the first plurality of holes 55a-55d and the holes 60K, 60a, 60d, 60f of the second plurality of holes 60a-60$\ell$. Subsequently, the fasteners 70a, 70b are now attached by threading into the holes 80a, 80b of the connecting legs 75a, 75b and holes (not depicted) in the sidewall 22. Thus, the interface assembly frame 45 is construable to be detachably attachable to the sensor module frame 40.

Now referring back to FIG 1 and FIG 2, if the cockpit region comprises a slanted sidewall (not depicted), i.e. a sidewall which is for example declined at 30º in a clockwise direction to the ceiling 21, wherein the sensor module 15 is to be attached to the slanted sidewall for accommodating the sensor module 15 in the recess 20, then the holes 55a-55d of the sensor module frame 40 and holes 60b, 60d, 60h, 60j of the interface assembly frame 45 that are required to be connected for realizing a third pair set of holes $PS_3$ that enable the connection of the sensor module 15 to the aforementioned declined sidewall are indicated below for establishing the third connecting configuration.

$$PS_3 = \{(55a, 60b), (55b, 60d), (55c, 60h), (55d, 60j)\} \text{ (offset of } 30^o)$$

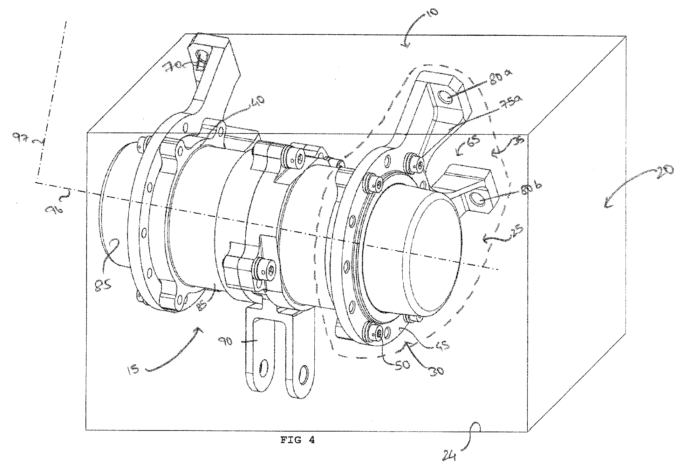

This results in the third connecting configuration for connecting the sensor module 15 to the declined sidewall of the recess 20, and the third connecting configuration is depicted in FIG 4.

In short, from the first connecting configuration as defined by the first pair set of holes $PS_1$, firstly the fasteners 70a, 70b are detached by unthreading from the connecting legs 75a, 75b, and the fasteners 50-50d are detached by unthreading from the first plurality of holes 55a-55d and the second plurality of holes 60a, 60c, 60g, 60i. Thereafter, the interface assembly frame 45 is rotated clockwise by 30º, and the fasteners 50a-50d are attached by threading into the first plurality of holes 55a-55d and the holes 60b, 60d, 60h, 60j of the second plurality of holes 60a-60ℓ. Subsequently, the fasteners 70a, 70b are now attached by threading into the holes 80a, 80b of the connecting legs 75a, 75b and holes (not depicted) in the declined sidewall.

Thus, by making it possible to unfasten the interface assembly frame 45 from the sensor module frame 40, rotate the interface assembly frame 45 with respect to the sensor module frame 40 in accordance with the desired orientation of the region conforming end 65 for establishing a mechanical connection with the desired location in the recess 20 (i.e. surface in the recess), and fasten the interface assembly frame 45 with the sensor module frame 40 at a new rotational orientation, it is possible to adjust the arrangement 10 for connecting the sensor module 15 to different locations 21, 22, 24 of the recess 20 by choosing appropriate connecting configurations ($PS_1$, $PS_2$, $PS_3$).

It may be noted herein that during all connecting configurations, for example $PS_1$, $PS_2$, $PS_3$ or any other new connecting configuration, the orientation of the sensor module 15 is not changed with respect to the longitudinal axis 96, i.e. the lever 90 is always at the same desired orientation with respect to the longitudinal axis 96.

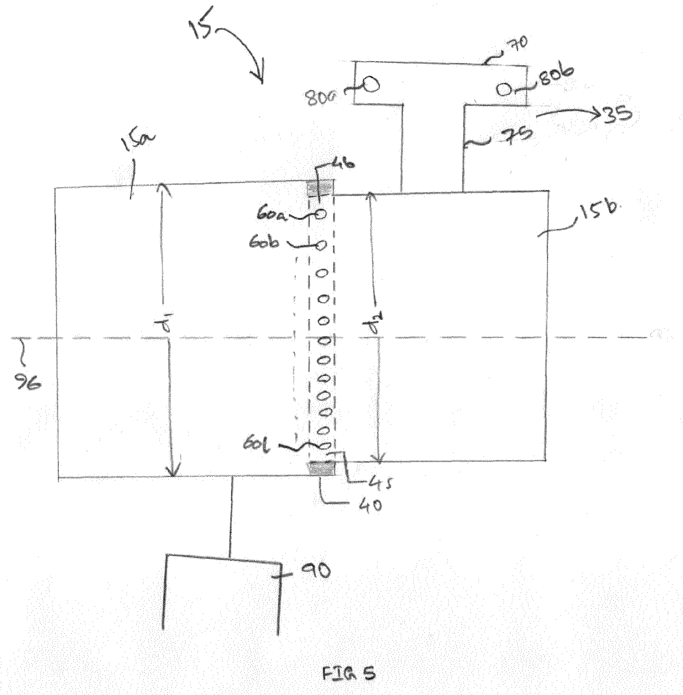

An alternate embodiment of the arrangement 10 is depicted in FIG 5.

In this embodiment, the sensor module 15 comprises two concentric cylindrical parts, viz., a first sensor module part 15a and a second sensor module part 15b. An outer diameter (d1) of the first sensor module part 15a is greater than an inner diameter (d2) of the second sensor module part 15b. The first sensor module part 15a and the second sensor module part 15b are connected to each other at a connecting region 46, wherein a second portion of the second sensor module part 15b is fitted inside a first portion of the first sensor module part 15a at the connecting region 46.

The first portion of the first sensor module part 15a comprises a first plurality of holes 55a-55d, and the second portion of the second sensor module part 15a comprises a second plurality of holes 60a-60ℓ. Herein, each of the first plurality of holes 55a-55d and each of the second plurality of holes 60a-60ℓ are radial holes, and extend radially inward. A first portion 40 of the first sensor module part 15a comprising the first plurality of holes 55a-55d is construed as the sensor module frame 40. A second portion 45 of the second sensor module part 15b comprising the second plurality of holes 60a-60ℓ is construed as the interface assembly frame 45. To establish a tight connection between the sensor module parts 15a, 15b, four exemplary fasteners 50a-50d such as screws, bolts, et cetera, are inserted through four corresponding holes of the first plurality of holes 55a-55d, and four of the corresponding second plurality of holes 60a, 60c, 60g, 60i and tightened accordingly.

Therefore, the first connecting configuration can be realized, wherein a first pair set of holes ($PS_1$), whereby the second connector unit 35 is oriented towards a desired location in the recess 20 whereto the sensor module 15 is to be attached.

If the sensor module 15 is required to be attached to a different desired location in the recess 20, which requires a different orientation of the second connector unit 35, it is possible to transit to the second connecting configuration by performing the following steps. Firstly, the fasteners 50a-50d connecting the first plurality of holes 55a-55d, and the second plurality of holes 60a, 60c, 60g, 60i in the first connecting configuration ($PS_1$) are unfastened. Secondly, the second sensor module part 15b is rotated with respect to the first sensor module part 15a such that the second connector unit 35 is oriented towards the different desired location in the recess 20 whereto the sensor module 15 is to be attached.

Herein, by means of rotation of the second sensor module part 15b and orienting the second connector unit 35 towards the different location, connection between the first sensor module part 15a and the second sensor module part 15b is established at a different pair set of holes of the first plurality of holes 55a-55d and the second plurality of holes 60d, 60k, 60f, 60a. Thirdly, the fasteners 50 are now inserted into those holes of the first plurality of holes 55a-55d and the second plurality of holes 60d, 60k, 60f, 60a that correspond to the second connecting configuration ($PS_2$) and are subsequently tightened to establish a tight connection between the first sensor module part 15a and the second sensor module part 15b, such that the second connector unit 35 is oriented towards the different desired location.

Now, the end connecting means 70a, 70b are used for connecting the second connector unit 35 to the different desired location, thereby connecting the sensor module 15 to the vehicle, such that orientation of the sensor module remains unchanged, i.e. the lever 90 is again at the same desired orientation with respect to the longitudinal axis 96.

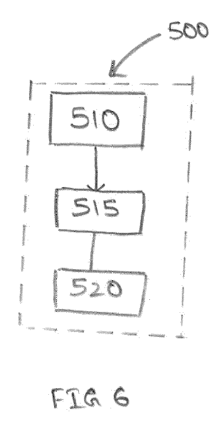

FIG 6 depicts a flowchart 500 of a method for connecting the sensor module 15 to the recess 20 of the vehicle using the arrangement 10 is disclosed herein.

In step 510, the interface assembly 25 having the first connector unit 30 and the second connector unit 35 is constructed. In step 515, the first connector unit 30 is connected to the portion of the sensor module 15. In step 520, the second connector unit 35 is connected to the desired surface (ceiling 21) of the recess 20. The interface assembly 25 is constructed such that in each of the connecting configurations (as defined by different pair set of holes $PS_1$, $PS_2$, $PS_3$) the sensor module 15 is connected to different locations of the recess 20.

Though the invention has been described herein with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the scope of the present invention.

List of reference signs

10 Arrangement
15 Sensor module
20 Predefined region
21 Ceiling
22 Sidewall
24 Floor
25 Interface assembly
30 First connector unit
35 Second connector unit
40 Sensor module frame
45 Interface assembly frame
46 Connecting region
50a-50d Frame connecting means
55a-55d First plurality of holes
60a-60ℓ Second plurality of holes
65 Region conforming end
70 End connecting means
75 Connecting legs
80 Third plurality of holes
85 External curved surface
90 Lever
95 Outwardly extending portion
96 Longitudinal axis
97 Radial axis
500 Flowchart
510 Step of constructing the interface assembly
515 Step of connecting the first connector unit to the portion of the sensor module
520 Step of connecting the second connector unit to the predefined region Claims

**Claims**

1. An arrangement (10) for connecting a sensor module (15) to a predefined region (20) of a vehicle, the arrangement (10) comprising:

   - an interface assembly (25) having a first connector unit (30) and a second connector unit (35), wherein the first connector unit (30) is connected to a portion of the sensor module (15), and wherein the second connector unit (35) is connected to the predefined region (20),

   **characterized in that** at least one of the first connector unit (30) and the second connector unit (35) is adjustable for changing connecting configurations (PS$_1$, PS$_2$, PS$_3$,.. PS$_x$) between the sensor module (15) and the predefined region (20), wherein in each of the connecting configurations the sensor module (15) is connected to different locations (21, 22, 24) of the predefined region (20).

2. The arrangement (10) according to claim 1, wherein the first connector unit (30) comprises:

- a sensor module frame (40),
- an interface assembly frame (45), and
- a frame connecting means (50) for connecting the sensor module frame (40) and the interface assembly frame (45).

3. The arrangement (10) according to claim 2,
wherein the sensor module frame (40) comprises a first plurality of holes (55),
wherein the interface assembly frame (45) comprises a second plurality of holes (60),
wherein a first pair set of holes (PS$_1$) of the first plurality of holes (55) and the second plurality of holes (60) is connectable for obtaining a first connecting configuration, wherein a second pair set of holes (PS$_2$) of the first plurality of holes (PS$_1$) and the second plurality of holes (PS$_2$) is connectable for obtaining a second connecting configuration, and wherein the first pair set of holes (PS$_1$) is different from the second pair set of holes (PS$_2$).

4. The arrangement (10) according to claim 2 or 3, wherein the frame connecting means (50) is selected from a group comprising nuts and bolts, screws, rivets, and tie bolts.

5. The arrangement (10) according to any of the claims 2 to 4, wherein a geometric profile of the sensor module frame (40) conforms to an external geometric profile of the sensor module (15).

6. The arrangement (10) according to claim 5, wherein the geometric profile of the sensor module frame (40) is annular.

7. The arrangement (10) according to any of the claims 2 to 6, wherein the sensor module frame (40) is integral to the sensor module (15).

8. The arrangement (10) according to any of the claims 1 to 7, wherein the second connector unit (35) comprises:

- a region conforming end (65), and
- an end connecting means (70) for connecting the region conforming end (65) to the predefined region (20).

9. The arrangement (10) according to claim 8, wherein the region conforming end (65) comprises a plurality of connecting legs (75).

10. The arrangement (10) according to claim 9, wherein a length of each of the plurality of connecting legs (75) is different.

11. The arrangement (10) according to claim 9 or 10, wherein the plurality of connecting legs (75) comprises one or more connecting holes (80).

12. The arrangement (10) according to any of the claims 7 to 11, wherein the end connecting means (70) is selected from a group comprising nuts and bolts, screws, rivets, and tie bolts.

13. The arrangement (10) according to any of the claims 1 to 12, wherein the second connector unit (35) is detachably attachable to the sensor module (15).

14. A fly-by-wire sensor module (15) for controlling an aeroplane, wherein the fly-by-wire sensor module (15) is arranged in a recess (20) of the aeroplane, wherein the recess is defined by at least one or more surfaces (21, 22, 24) of the aeroplane, the fly-by-wire sensor module (15) comprising:

- an interface assembly (25) having a first connector unit (30) and a second connector unit (35), wherein the first connector unit (30) is connected to a portion of the fly-by-wire sensor module, and wherein the second connector unit (35) is connected to a surface (21) of the one or more surfaces (21, 22, 24),

wherein at least one of the first connector unit (30) and the second connector unit (35) is adjustable for changing connecting configurations between the fly-by-wire sensor module (15) and the surface (21), wherein in each of the connecting configurations the fly-by-wire sensor module (15) is connected to different locations of the one or more surfaces (21, 22, 24) without altering an orientation of the fly-by-wire sensor module (15).

15. A method (500) for connecting the sensor module (15) to the predefined region (20) of the vehicle using the arrangement according to any of the claims 1 to 13, the method (500) comprising:

- (510) a step of constructing the interface assembly (25) having the first connector unit (30) and the second connector unit (35);
- (515) a step of connecting the first connector unit (30) to the portion of the sensor module (15), and
- (520) a step of connecting the second connector unit (35) to the predefined region (20),

wherein the interface assembly (25) is constructed such that in each of the connecting configurations the sensor module (15) is connected to different locations of the one or more surfaces (21, 22, 24).

FIG 1

FIG 2

FIG 3

FIG 4

FIG 5

FIG 6

Europäisches
Patentamt

European
Patent Office

Office européen
des brevets

# EUROPEAN SEARCH REPORT

Application Number

EP 16 30 5732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 407 351 A1 (BURY SP ZOO [PL]) 18 January 2012 (2012-01-18) | 1-5,13, 15 | INV. G01D11/30 B60R11/00 F16B1/00 |
| Y | * paragraphs [0001], [0002], [0016] - [0019]; figures 1-4,10 * | 6-12 | |
| Y | US 2013/303000 A1 (WITTER KEVIN W [US] ET AL) 14 November 2013 (2013-11-14) * paragraphs [0051], [0052]; figure 3 * | 6,7,12 | |
| Y | EP 2 249 074 A1 (HTC CORP [TW]) 10 November 2010 (2010-11-10) * paragraphs [0010] - [0012]; figures 1,2A,2B * | 8,12 | |
| Y | DE 20 2013 007859 U1 (HORBACH KRISTINE [DE]) 10 October 2013 (2013-10-10) * paragraphs [0009] - [0011]; figures 5,6,11 * | 9-11 | |

TECHNICAL FIELDS
SEARCHED      (IPC)

G01D
B60R
F16B

~~The present search report has been drawn up for all claims~~

| Place of search | Date of completion of the search | Examiner |
|---|---|---|
| Munich | 7 December 2016 | Kurze, Volker |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-13, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 16 30 5732

The Search Division considers that the present European patent application does not comply with the
requirements of unity of invention and relates to several inventions or groups of inventions, namely:

    1. claims: 1-13, 15

        Arrangement for connecting a sensor module to a predefined
        region of a vehicle
              ---

    2. claim: 14

        Fly-by-wire sensor module for controlling an aeroplane
              ---

## ANNEX TO THE EUROPEAN SEARCH REPORT
## ON EUROPEAN PATENT APPLICATION NO.

EP 16 30 5732

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2016

| Patent document cited in search report | | Publication date | Patent family member(s) | | Publication date |
|---|---|---|---|---|---|
| EP 2407351 | A1 | 18-01-2012 | NONE | | |
| US 2013303000 | A1 | 14-11-2013 | US 2013303000 A1 | | 14-11-2013 |
| | | | US 2014077044 A1 | | 20-03-2014 |
| | | | US 2015249302 A1 | | 03-09-2015 |
| EP 2249074 | A1 | 10-11-2010 | AT 507431 T | | 15-05-2011 |
| | | | EP 2249074 A1 | | 10-11-2010 |
| | | | TW 201041488 A | | 16-11-2010 |
| | | | US 2010282930 A1 | | 11-11-2010 |
| DE 202013007859 | U1 | 10-10-2013 | NONE | | |

EPO FORM P0459

For more details about this annex : see Official Journal of the European Patent Office, No. 12/82